## Europäisches Patentamt
## European Patent Office
## Office européen des brevets

(19)

(11) Veröffentlichungsnummer: **0 339 515 B1**

(12) # EUROPÄISCHE PATENTSCHRIFT

(45) Veröffentlichungstag der Patentschrift: **23.12.92**

(51) Int. Cl.5: **H04L 7/02**

(21) Anmeldenummer: **89107270.4**

(22) Anmeldetag: **21.04.89**

(54) **Verfahren und Anordnung zur Taktrückgewinnung aus einem Datensignal durch fortlaufende Anpassung eines örtlich erzeugten Taktes an ein Datensignal.**

(30) Priorität: **29.04.88 DE 3814640**

(43) Veröffentlichungstag der Anmeldung:
**02.11.89 Patentblatt 89/44**

(45) Bekanntmachung des Hinweises auf die Patenterteilung:
**23.12.92 Patentblatt 92/52**

(84) Benannte Vertragsstaaten:
**AT BE CH DE ES FR GB GR IT LI NL SE**

(56) Entgegenhaltungen:
**GB-A- 2 069 263**
**GB-A- 2 143 407**

(73) Patentinhaber: **SIEMENS AKTIENGESELL-SCHAFT**
**Wittelsbacherplatz 2**
**W-8000 München 2(DE)**

(72) Erfinder: **Kollmeier, Manfred, Dipl.-Ing. (FH)**
**Konstanzer Strasse 40**
**W-8000 München 40(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 339 515 B1

## Beschreibung

Die Erfindung bezieht sich auf ein Verfahren zur Taktrückgewinnung aus einem Datensignal durch fortlaufende Anpassung eines örtlich erzeugten Taktes an das Datensignal und auf eine Anordnung zur Durchführung dieses Verfahrens.

Eine Taktrückgewinnung wurde bei Digitalsignal-Multiplexgeräten mit Hilfe von aktiven oder passiven analogen Schaltungen in Verbindung mit Schwingkreisen verwirklicht.

Nach der Europäischen Patentanmeldung 0275406 A1 erfolgt die Taktrückgewinnung für ein synchrones oder plesiochrones Datensignal digital. Dabei wird eine Folge von Hilfstakten erzeugt, die untereinander gleiche Phasenabstände sowie die gleiche und gegenüber der Bitrate des Datensignals entweder etwas größere oder etwas kleinere Frequenz aufweisen und von denen einer als Datenhilfstakt dient. Ein Phasensensor mißt den Abstand der als wirksam ausgewählten Flanken des Datensignals und des Datenhilfstakts und veranlaßt bei Unterschreiten eines definierten Minimalabstandes eine Phasenkorrektur durch Auswahl eines anderen Hilfstaktes als Datenhilfstakt. Dadurch vergrößert sich der meßbare Abstand über den definierten Minimalwert. Da die Frequenz der Hilfstakte ungleich der Bitrate des Datensignals sein muß, darf der Jitter des Datensignals nicht so groß werden, daß er diese Ungleichheit aufhebt.

Nach einem anderen Vorschlag kann die Phase eines binären Datensignals fortlaufend an einen zentralen Takt angepaßt werden. Hierbei wird durch Abtakten des Datensignals mit Hilfstakten eine Folge von Hilfsdatensignalen erzeugt, die untereinander gleiche Phasenabstände und die Frequenz des zentralen Takts aufweisen und von denen einer als Datentakt dient. Die Auswahl dieses Datentakts und damit der Phase erfolgt so, daß bei der Abtaktung Impulsbreitenverzerrungen und Jitter des Datensignals keine Wirkung zeigen.

In der britischen Patentanmeldung GB 2 069 263 A ist eine Anordnung zur Synchronisation beschrieben, bei der aus einem Taktsignal durch eine Verzögerungsleitung mehrere phasenverschobene Taktsignale erzeugt werden, von denen dasjenige Taktsignal, dessen positive Flanke der positiven Flanke des Datensignals am nächsten liegt, von einem Entscheidungs-Schaltkreis auf den Ausgang durchgeschaltet wird.

In der britischen Patentanmeldung GB 21 43 407 A ist eine weitere Synchronisierung für Datensignale beschrieben, bei der ebenfalls zunächst mehrere phasenverschobene Taktsignale erzeugt werden, die den Takteingängen verschiedener Kippstufen einer Entscheidungsschaltung zugeführt sind. Mit dem ersten Datenbit, das der log. 1 entspricht, wird eine dieser Kippstufen eingestellt und schaltet ein geeignetes Taktsignal an den Ausgang durch.

Der Erfindung liegt die Aufgabe zugrunde, ein Verfahren zur Phasenanpassung des Taktes an das Datensignal sowohl im synchronen Netz als auch für den plesiochronen Fall zu realisieren, bei dem die Hilfstaktfrequenz gleich oder geringfügig höher oder tiefer als die Bitrate des Datensignals sein kann.

Ausgehend von einem Verfahren zur fortlaufenden Anpassung eines Taktes an ein Datensignal wird diese Aufgabe erfindungsgemäß mit den Merkmalen des Patentanspruchs 1 gelöst.

Eine weitestgehend integrierbare Anordnung zur Durchführung dieses Verfahrens enthält die Merkmale der Patentansprüche 3-6.

Anhand von Ausführungsbeispielen wird die Erfindung nachstehend näher erläutert.

Fig. 1     zeigt ein erstes Modell zur Erläuterung des Verfahrens,

Fig. 2     zeigt einen Pulsplan zur Aufbereitung eines HDB3-codierten Datensignals,

Fig. 3     zeigt einen Pulsplan zum ersten Modell,

Fig. 4     zeigt ein zweites Modell zur Erläuterung des Verfahrens,

Fig. 5     zeigt ein Blockschaltbild einer Anordnung zur Durchführung des Verfahrens,

Fig. 6     zeigt ein Anordnungsbeispiel detailliert und

Fig. 7     zeigt einen Pulsplan zur Erläuterung der Anordnung nach Fig. 6.

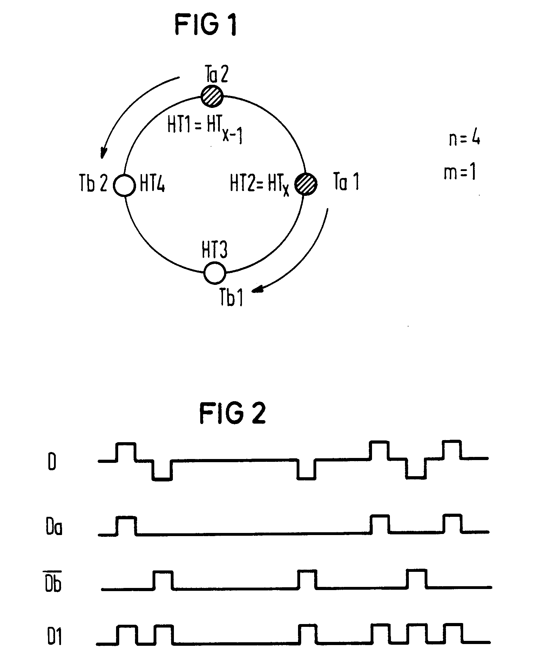

Fig. 1 zeigt ein Modell zur Erläuterung des erfindungsgemäßen Verfahrens für einen Fall $m = 1$ und $n = 4$. Auf einem großen Kreis sind im Phasenabstand von 90° vier kleine Kreise angeordnet, die Hilfstakte HT1 bis HT4 darstellen. Nach einem Zeitpunkt, an dem das Datensignal einen definierten logischen Zustand aufwies, ging nach dessen Änderung zuerst der Hilfstakt HT2 in einen anderen logischen Zustand über. Er ist deswegen als Hilfstakt $HT_x$ bezeichnet. Dieser und der phasenmäßig vorangehende Hilfstakt $HT_{x-1}$ bzw. HT1 dürfen nicht als Takt T verwendet werden. Die schraffierten kleinen Kreise weisen diese als Teile eines ausgeschlossenen Bereichs auf. Dessen Einführung hat Zwei Gründe: Einmal soll der Abstand zwischen der Datenflanke und der Taktflanke, mit der das Datensignal abgetaktet wird, möglichst groß sein, um Bitfehler durch Flankenjitter des Datensignals zu vermeiden. Zum anderen würden bei Verwendung von Hilfstakten des ausgeschlossenen Bereichs als Takt T bei der Abtaktung von in der Impulsdauer verzerrten Datensignalen Bitfehler auftreten.

Im Falle, daß der Hilfstakt HT2 zuletzt der Takt Ta1 war, wird der Hilfstakt HT3 der neue Takt Tb1.

War dagegen der Hilfstakt HT1 der Takt Ta2, dann wird jetzt der Hilfstakt HT4 als neuer Takt Tb2 ausgewählt. Es erfolgt demnach jeweils ein Übergang auf den phasenmäßig nächstbenachbarten Hilfstakt. War dagegen zuletzt einer der Hilfstakte HT3 oder HT4 der Takt T, dann ist kein Wechsel erforderlich.

In jedem neuen Anpassungsintervall können der Hilfstakt $HT_x$ und damit die zwei schraffierten kleinen Kreise an anderen Plätzen des großen Kreises liegen.

Ist das Datensignal pseudoternär, weil es beispielsweise HDB3- oder AMI-codiert ist, werden alle negativen Impulse invertiert, wodurch ein binäres Datensignal entsteht. Fig. 2 zeigt ein HDB3-codiertes Digitalsignal D. Dieses wird vorab in zwei Pulse Da und Db zerlegt. Der erste enthält nur die positiven Impulse, der zweite lediglich die negativen. Nach Invertierung des Pulses Db werden die Pulse Da und $\overline{Db}$ addiert.

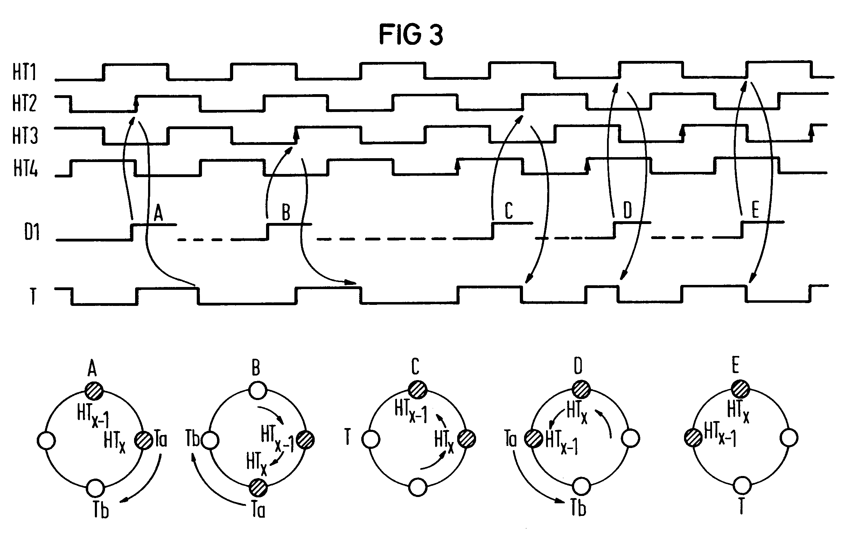

Wie anhand der Fig. 3 näher erläutert wird, dient die Position hier der positiven Flanke dieses Datensignals D1 in Bezug auf die Hilfstakte HT1 bis HT4 als Auswahlkriterium für die Umschaltung. Ausschlaggebend ist dabei, von welchem Hilfstakt aus HT1 bis HT4 der Zustandswechsel des Datensignals D1 bei der Abtaktung zuerst erkannt worden ist. Dieser Hilfstakt liefert den Hilfstakt $HT_x$.

Unter den Pulsen der Hilfstakte HT1 bis HT4 sind fünf Zustandswechsel A bis E des Datensignals D1 nach Zeitpunkten gezeigt, bei denen das Datensignal D1 den definierten Zustand "L" aufwies. Die von den Zustandswechseln bei A bis E nach oben gerichteten Pfeile zeigen an, welcher der Hilfstakte aus HT1 bis HT4 jeweils den Zustandswechsel zuerst erkannt hat und Hilfstakt $HT_x$ ist. Die mit Pfeilen gekennzeichneten Flanken der Hilfstakte HT2 bis HT4 bilden die vorderen Flanken des Taktes T.

Dasselbe zeigen die Modelle im unteren Teil der Fig. 3, die dem Modell in Fig. 1 entsprechen. Im Fall A ist der Hilfstakt HT2 = $HT_x$. Weil dieser Hilfstakt im ausgeschlossenen Bereich liegt, wird der Hilfstakt HT3 zum Takt Tb. Im Fall B wird der Hilfstakt HT3 zu $HT_x$. Der ausgeschlossene Bereich verdrängt den Takt Ta und es wird der Hilfstakt HT4 zum Takt Tb. Im Falle C wird der Hilfstakt HT2 zu $HT_x$. Als Takt T kann unverändert der Hilfstakt HT4 bleiben. Im Fall D wird der Hilfstakt HT1 zu $HT_x$. Der Takt T liegt erneut im ausgeschlossenen Bereich. Neuer Takt Tb wird der Hilfstakt HT3. Im Fall E bleibt der Hilfstakt HT1 als $HT_x$. Der Hilfstakt HT3 kann weiterhin als Takt T verwendet werden.

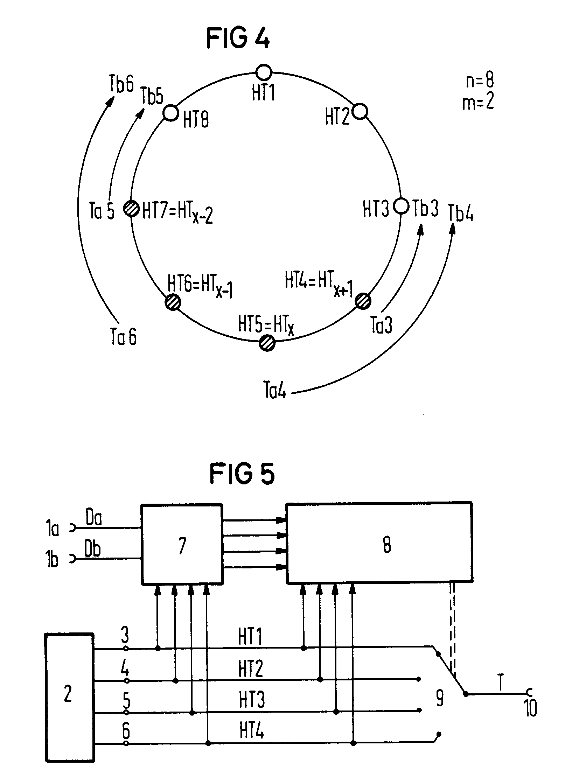

Fig. 4 zeigt ein Modell mit $m = 2$ und $n = 8$. Zum ausgeschlossener Bereich gehören jetzt die Hilfstakte HT4 bis HT7, bzw. $HT_{x-2}$ bis $HT_{x+1}$. War der Takt T ein im ausgeschlossenen Bereich liegender wie Ta3, Ta4, Ta5 oder Ta6, dann wird der Hilfstakt HT3 oder HT8 der neue Takt Tb3, Tb4, Tb5 oder Tb6.

Die Zahl n bestimmt die maximale bzw. minimale Frequenz der Hilfstakte nach der Gleichung

$$f_{HT} = f_{DT} \overset{+}{\underset{-}{}} \frac{f_{DT}}{n \cdot o},$$

wobei $f_{DT}$ die Frequenz des Datensignaltaktes und o die maximale Anzahl der Perioden der Hilfstakte pro aktiver Datenflanke ist. Für ein vierstelliges Codewort "1000" ist demnach o = 4.

Die Zahlen m und n geben den maximal zulässigen Flankenjitter des Datensignals für bitfehlerfreie Abtaktung mit dem Takt T an.

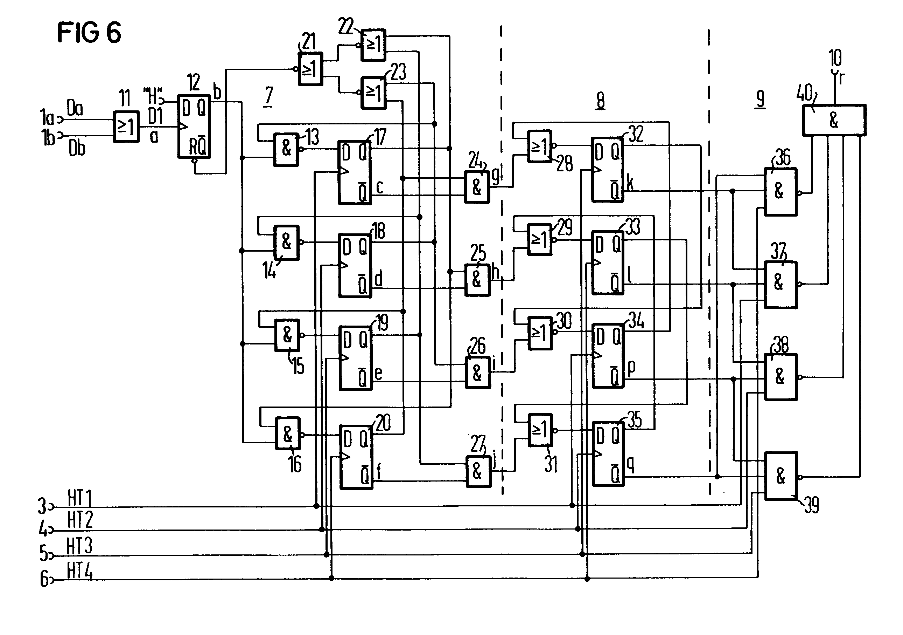

Fig. 5 zeigt das Blockschaltbild einer Anordnung zur Durchfuhrung des erfindungsgemäßen Verfahrens. Es enthält einen Phasendetektor 7, eine Steuerlogik 8 und einen Umschalter 9.

Es soll der Takt T aus dem HDB3-codierten Digitalsignal D zurückgewonnen werden. Die Pulse Da und Db werden den Eingängen 1a und 1b des Phasendetektors 7 zugeführt und dort zum Digitalsignal D1 addiert. Weiter werden sowohl an den Phasendetektor 7 als auch an die Steuerlogik 8 die Hilfstakte HT1 bis HT4 angelegt. Um einen spikefreien Takt T mit einer geeigneten Phasenlage zum Datensignal D zu erzeugen, wird durch Umschalten des Umschalters 9 der Takt T mit unterschiedlich langen Taktperioden gemäß Fig. 3 erzeugt, dessen mittlere Frequenz dem Datentakt $f_{DT}$ entspricht.

Die Umschalterichtung für die Wahl eines Hilfstaktes als Takt T hängt von der Änderung der Phasenlage zwischen dem Datensignal D und den Hilfstakten ab. Damit ist die Umschalterichtung vom Vorzeichen der Frequenzabweichung und die Umschaltegeschwindigkeit von der absoluten Größe der Frequenzabweichung $\pm f_{DT}/(n \cdot o)$ abhängig. Zusätzlich spielt der Jitter des Datensignals D eine maßgebliche Rolle, den man als der Frequenzabweichung überlagertes Signal interpretieren kann.

Die maximal mögliche Frequenzabweichung bei unverjittertem Datensignal D wird - wie bereits ausgeführt - von der Größe der Periodenänderung des Taktes T pro Umschaltung und damit von der Anzahl n der Hilfstakte sowie von der minimalen Anzahl der Impulse im Datensignal D bestimmt. Für ein ungestörtes HDB3-codiertes Datensignal D erhält man im ungünstigsten Fall nach jeder vierten Taktperiode (o = 4) einen Impuls. Damit kann bei 4 Hilfstakten jede vierte Periode des Taktes T um T/4 vergrößert oder verkleinert werden, d.h. die Frequenzabweichung darf $\pm f_{DT}/(4 \cdot 4)$ betragen.

Der Phasendetektor 7 erkennt die Impulse im aufbererteten HDB3-Signal Da und Db und vergleicht deren Phasenlage mit denen der verschiedenen Hilfstakte. Der Hilfstakt $HT_x$, bei dem nach dem Auftreten eines definierten Zustands Digitalsignals D als erstes eine wirksame beispielsweise positive Flanke folgt, bestimmt die Stellung des Umschalters 9 und damit den Hilfstakt, der den Takt T darstellt.

Die Steuerlogik 8 wertet die Informationen des Phasendetektors 7 aus und steuert damit die Stellung des Umschalters 9. Mit diesem wird ein Hilfstakt ausgewählt, auf den synchron und damit spikefrei umgeschaltet wird.

Wie bereits erwähnt ergeben sich bei der Umschaltung auf den phasenmäßig vorhergehenden oder nachfolgenden Hilfstakt im rückgewonnenen Takt T unterschiedlich lange Taktperioden. Der dabei entstehende Taktjitter hängt von der Phasendifferenz der aufeinanderfolgenden Hilfstakte und damit von der Anzahl n der Hilfstakte ab.

Bei n Hilfstakten erhält man eine Phasendifferenz von $360°/n$ und eine Verkürzung oder Verlängerung der Taktperiode um $\pm T/n$, was gleichbedeutend mit einem Taktjitter von $1/n$ Ulpp (Unit Interval peak-peak) ist.

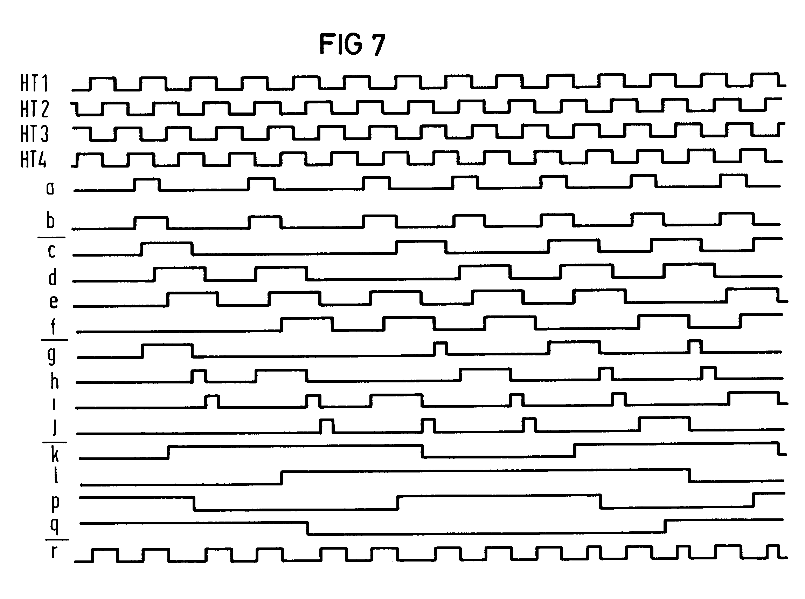

Fig. 6 zeigt eine Anordnung zur Durchführung des erfindungsgemäßen Verfahrens detailliert und Fig. 7 einen Pulsplan dazu.

Der Phasendetektor 7 enthält ein ODER-Gatter 11, D-Flipflops 12 und 17 bis 20, NAND-Gatter 13 bis 16, NOR-Gatter 21 bis 23 und UND-Gatter 24 bis 27. Die Steuerlogik 8 enthält NOR-Gatter 28 bis 31 und D-Flipflops 32 bis 35. Der Umschalter 9 ist mit NAND-Gattern 36 bis 39 und einem UND-Gatter 40 realisiert.

Das D-Flipflop 12 dient als Flankendetektor, der seinen Q-Ausgang (b) auf einen logischen Zustand "H" setzt, wenn entweder im Puls Da oder im Puls Ob eine positive Flanke auftritt. Der logische Zustand an diesem Q-Ausgang dient zur Steuerung der D-Flipflops 17 bis 20. Die NOR-Gatter 21 bis 23 setzen das D-Flipflop 12 wieder in den Ursprungszustand zurück, wenn der logische Zustand "H" am Punkt b von drei der vier D-Flipflops 17 bis 20 abgetaktet wird. Welche drei D-Flipflops es sind, hängt von der Phasenlage zwischen dem Impuls am Punkt a und den Phasen der Hilfstakte HT1 bis HT4 ab. Anschließend werden die D-Flipflops 17 bis 20 durch Abtakten des Ursprungszustandes am Punkt b in den Anfangszustand versetzt und das D-Flipflop 12 kann auf den nächsten Datenimpuls reagieren. Um einen undefinierten Zustand des in der Abtaktreihenfolge vierten D-Flipflops aufgrund zu langer Gatterlaufzeiten zu vermeiden, wird dessen D-Eingang über das Gatter 13, 14, 15 oder 16 blockiert. Diese Blockierung wird von dem D-Flipflop ausgelöst, welches in der Abtaktreihenfolge das erste ist. Zusätzlich wird mit Hilfe der UND-Gatter 24 bis 27 an deren Ausgängen g bis j ein Impuls für die Steuerlogik 8 erzeugt, der als Umschaltinformation dient.

Die Steuerlogik 8 erkennt die Impulse des Phasendetektors 7 und veranlaßt eine eventuell notwendige Umschaltung synchron und damit spikefrei. Um auf einen nicht ausgeschlossenen Hilfstakt zu schalten, wird der D-Eingang des D-Flipflops 32 vom D-Flipflop 34 über das NOR-Gatter 28 und umgekehrt der D-Eingang des D-Flipflops 34 vom D-Flipflop 32 über das NOR-Gatter 30 blockiert. In gleicher Weise verhält es sich mit den D-Flipflops 33 und 35 und den NOR-Gattern 29 und 31. Die einzelnen Impulse des Phasendetektors 7 werden von je einem D-Flipflop 32 bis 35 abgetaktet. Ist bereits ein geeigneter Hilfstakt als Takt T aktiv, so ist das D-Flipflop vom entsprechenden NOR-Gatter 28, 29, 30 oder 31 blockiert. Da jedes D-Flipflop von einem anderen Hilfstakt gesteuert wird, und außerdem die von den übernächsten Hilfstakten gesteuerten D-Flipflops miteinander verknüpft sind, erhält man bei einer Umschaltung eine Überlappung der Ausgangszustände der D-Flipflops 32 bis 35. Dies bedeutet, daß zuerst der neue Hilfstakt als Takt Tb eingeschaltet und anschließend der frühere Hilfstakt als Takt Ta ausgeschaltet wird.

Durch die getaktete Steuerung des Umschelters 9 mit den D-Flipflops 32 bis 35 erreicht man nicht nur eine synchrone und spikefreie Umschaltung zwischen den Hilfstakten, sondern auch eine weitgehende Unabhängigkeit von den Laufzeiten der Gatter und Kippstufen und damit eine hohe Arbeitsfrequenz der gesamten Schaltung. Voraussetzung ist allerdings eine geeignete Wahl zwischen den geschalteten Hilfstakten an den NAND-Gattern 36 bis 39 und den steuernden Hilfstakten an den Takteingängen der D-Flipflops 32 bis 35.

Der aus den NAND-Gattern 36 bis 39 gebildete Umschalter 9 besitzt insgesamt eine invertierende Funktion. Aus diesem Grunde werden mit den NAND-Gattern 36 bis 39 die Hilfstakte, die gegenüber dem Ausgang 10 des Umschalters 9 invertiert sind, ein- bzw. ausgeschaltet.

**Patentansprüche**

1. Verfahren zur Taktrückgewinnung aus einem Datensignal durch fortlaufende Anpassung eines örtlich erzeugten Taktes (T) an das Datensignal (D),

   bei dem n Hilfstakte (HT1 - HT8) erzeugt werden, die dieselbe im Bereich der Bitrate des Datensignals (D) liegende Frequenz $f_{HT}$ besitzen, die eine Folge mit Phasenabständen $360°/n$ bilden (n 2) und von denen einer als Takt (T) dient,

   jedes Anpassungsintervall zu einem Zeitpunkt (t1) beginnt, an dem das Datensignal (D) einen definierten Zustand hat,

daß jeweils festgestellt wird, welcher Hilfstakt (HT1 - HT8) zu diesem Zeitpunkt (t1) als Takt (Ta,Ta1-Ta6) ausgewählt ist und

jeweils ermittelt wird, welcher Hilfstakt (HT1-HT8) mit seiner wirksamen Flanke zuerst eine Änderung des Datensignals (D) aus dem definierten Zustand erkennt,

**dadurch gekennzeichnet,**

daß jeweils dieser Hilfstakt ($HT_x$), m in der Phase unmittelbar vor diesem Hilfstakt ($HT_x$) liegende Hilfstakte und m-1 in der Phase unmittelbar nach diesem Hilfstakt ($HT_x$) liegende Hilfstakte von der Auswahl eines neuen Taktes (Tb,Tb1 - Tb6) ausgeschlossen werden

$$\left(m \leq \frac{n-1}{2}\right),$$

daß jeweils kein neuer Takt (Tb,Tb1 - Tb6) ausgewählt wird, wenn der bisherige (Ta,Ta1 - Ta6) einer der nicht ausgeschlossenen Hilfstakte (HT1 - HT8) ist,

daß jeweils ein in der Phase dem bisherigen Takt (Ta,Ta1 - Ta6) phasenmäßig nächstbenachbarter und nicht ausgeschlossener Hilfstakt (HT1 - HT8) als neuer Takt (Tb,Tb1 - Tb6) ausgewählt wird, wenn der bisherige einer der ausgeschlossenen Hilfstakte (HT1 - HT8) ist, und

daß bei Einleitung des Verfahrens ein beliebiger nicht ausgeschlossener Hilfstakt (HT1 - HT8) als Takt (Ta) ausgewählt wird.

2. Verfahren nach Anspruch 1,
**dadurch gekennzeichnet,**
daß die Frequenz $f_{HT}$ zwischen den Grenzwerten

$$f_{DT} \pm \frac{f_{DT}}{n \cdot o}$$

gewählt ist, wobei $f_{DT}$ die Frequenz des Datensignaltaktes und o die maximale Anzahl von Hilfstaktperioden pro aktiver Datenflanke ist.

3. Anordnung zur Taktrückgewinnung aus einem Datensignal durch fortlaufende Anpassung eines örtlich erzeugten Taktes (T) an das Datensignals (D),
bei der ein Phasendetektor (7) vorgesehen ist, der ermittelt, welcher Hilfstakt (HT1 - HT8) mit seiner wirksamen Flanke in einem Anpassungsintervall zuerst eine Änderung des Datensignals (D) aus dem definierten Zustand erkennt,
eine Steuerlogik (8) vorgesehen ist, die einen der Hilfstakte (HT1 - HT8) als Takt (T) auswählt, und
ein spikefreier Umschalter (9) vorgesehen ist, der von der Steuerlogik (8) eingestellt wird,
**dadurch gekennzeichnet,**
daß in der Steuerlogik (8) Mittel vorgesehen sind, die feststellen, welcher Hilfstakt (HT1 - HT8) als Takt (Ta, Ta1 - Ta6) ausgewählt ist,
daß Mittel vorgesehen sind, die in der Phase unmittelbar vor und gegebenenfalls auch nach dem Hilfstakt ($HT_x$ = HT5), der zuerst eine Änderung des Datensignals (D) erkennt, liegende Hilftakte von der Auswahl des neuen Taktes (Tb, Tb1 - Tb6) ausschließen, und
daß Mittel vorgesehen sind, die den phasenmäßig nächstliegenden nicht ausgeschlossenen Hilfstakt ($HT_x$ = HT3) auswählen, wenn der bisherige Hilfstakt ($HT_x$) von der Auswahl eines neuen Taktes (Tb = HT3) ausgeschlossen ist.

4. Anordnung nach Anspruch 3 für m = 1 und n = 4,
**dadurch gekennzeichnet,**
daß der Phasendetektor (7),
ein ODER-Gatter (11), dessen Zwei Eingänge der Aufnahme eines nach der Polarität in zwei Pulse (Da, Db) zerlegten pseudoternären Datensignals (D) dient,
ein fünftes D-Flipflop (12), dessen Takteingang mit dem Ausgang des ODER-Gatters (11) verbunden ist,
ein erstes bis viertes NAND-Gatter (13 - 16), deren erster Eingang jeweils mit dem Q-Ausgang des fünften D-Flipflops (12) verbunden sind,
ein erstes bis viertes D-Flipflop (17 - 20), deren D-Eingänge jeweils mit dem Ausgang des NAND-Gatters (13 - 16) gleicher Ordnungszahl und deren Q-Ausgänge jeweils mit dem zweiten Eingang des zyklisch in seiner Ordnungszahl vorangehenden NAND-Gatters (13 - 16) verbunden sind und deren Takteingänge jeweils der Aufnahme eines Hilfstakts (HT1 - HT4) gleicher Ordnungszahl dienen,
ein erstes bis viertes UND-Gatter (24 - 27), deren erster Eingang jeweils mit dem $\overline{Q}$-Ausgang des D-Flipflops (17 - 20)
gleicher Ordnungszahl und deren zweiter Eingang jeweils mit dem Q-Ausgang des zyklisch in der Ordnungszahl an dritter Stelle nachfolgenden D-Flipflops (17 - 20) verbunden sind,
ein erstes NOR-Gatter (23), dessen erster Eingang mit dem zweiten Eingang des ersten UND-Gatters (24) und dessen zweiter Eingang mit dem Q-Ausgang des zweiten D-Flipflops (18) verbunden sind,
ein zweites NOR-Gatter (22), dessen erster Eingang mit dem zweiten Eingang des zweiten UND-Gatters (25) und dessen zweiter Eingang mit dem Q-Ausgang des dritten D-Flipflops (19) verbunden sind, und

ein drittes NOR-Gatter (21) enthält, dessen erster Eingang mit dem Ausgang des ersten NOR-Gatters (23), dessen zweiter Eingang mit dem Ausgang des zweiten NOR-Gatters (22) und dessen Ausgang mit dem Rücksetzeingang des fünften D-Flipflops (12) verbunden sind.

5. Anordnung nach den Ansprüchen 3 und 4 für m = 1 und n = 4,
   **dadurch gekennzeichnet,**
   daß die Steuerlogik (8)
   ein viertes NOR-Gatter (28), deren erster Eingang mit dem Ausgang des ersten UND-Gatters (24) verbunden ist,
   ein fünftes NOR-Gatter (29), dessen erster Eingang mit dem Ausgang des zweiten UND-Gatters (25) verbunden ist,
   ein sechstes NOR-Gatter (30), dessen erster Eingang mit dem Ausgang des dritten UND-Gatters (26) verbunden ist,
   ein siebentes NOR-Gatter (31), dessen erster Eingang mit dem Ausgang des vierten UND-Gatters (27),
   ein sechstes D-Flipflop (32), dessen D-Eingang mit dem Ausgang des vierten NOR-Gatters (28) und dessen Q-Ausgang mit dem zweiten Eingang des sechsten NOR-Gatters (30) verbunden sind und dessen Takteingang der Aufnahme des dritten Hilfstaktes (HT3) dient,
   ein siebentes D-Flipflop (33), dessen D-Eingang mit dem Ausgang des fünften NOR-Gatters (29) und dessen Q-Ausgang mit dem zweiten Eingang des siebenten NOR-Gatters (31) gebunden sind und dessen Takteingang der Aufnahme des vierten Hilfstaktes (HT4) dient,
   ein achtes D-Flipflop (34), dessen D-Eingang mit dem Ausgang des sechsten NOR-Gatters (30) und dessen Q-Ausgang mit dem zweiten Eingang des vierten NOR-Gatters (28) und dessen Takteingang der Aufnahme des ersten Hilfstaktes (HT1) dient und ein neuntes D-Flipflop (35) enthält, dessen D-Eingang mit dem Ausgang des siebenten NOR-Gatters (31) und dessen Q-Ausgang mit dem zweiten Eingang des fünften NOR-Gatters (29) verbunden sind und dessen Takteingang der Aufnahme des zweiten Hilfstakts (HT2) dient.

6. Anordnung nach den Ansprüchen 3, 4 und 5 für m = 1 und n = 4,
   **dadurch gekennzeichnet,**
   daß der Umschalter (9),
   ein fünftes NAND-Gatter (36), dessen erster

Eingang mit dem $\overline{Q}$-Ausgang des neunten D-Flipflops (35) und dessen zweiter Eingang mit dem $\overline{Q}$-Ausgang des sechsten D-Flipflops (32) verbunden sind und dessen dritter Eingang der Aufnahme des vierten Hilfstaktes (HT4) dient,

ein sechstes NAND-Gatter (37), dessen erster Eingang mit dem $\overline{Q}$-Ausgang des sechsten D-Flipflops (32) und dessen zweiter Eingang mit dem $\overline{Q}$-Ausgang des siebenten D-Flipflops (33) verbunden sind und dessen dritter Eingang der Aufnahme des ersten Hilfstaktes (HT1) dient,

ein siebentes NAND-Gatter (38), dessen erster Eingang mit dem $\overline{Q}$-Ausgang des siebenten D-Flipflops (33) und dessen zweiter Eingang mit dem $\overline{Q}$-Ausgang des achten D-Flipflops (34) verbunden sind und dessen dritter Eingang der Aufnahme des zweiten Hilfstaktes (HT2) dient,

ein achtes NAND-Gatter (39), dessen erster Eingang mit dem $\overline{Q}$-Ausgang des achten D-Flipflops (34), dessen zweiter Eingang mit dem $\overline{Q}$-Ausgang des neunten D-Flipflops (35) verbunden sind und dessen dritter Eingang der Aufnahme des dritten Hilfstaktes (HT3) dient, und

ein fünftes UND-Gatter (40) enthält, dessen Eingänge jeweils mit einem Ausgang des fünften bis achten NAND-Gatters (36 - 39) verbunden sind und dessen Ausgang als Gesamtausgang (10) dient.

**Claims**

1. Method for clock recovery from a data signal by continual adjustment of a locally generated clock pulse (T) to the data signal (D),
   in which n auxiliary clock pulses (HT1 - HT8) are generated which have the same frequency $f_{HT}$ lying in the region of the bit rate of the data signal (D), which form a train with phase spacings 360°/n (n 2), and one of which serves as clock pulse (T),
   each adjustment interval commences at a time (t1) at which the data signal (D) has a defined state,
   in that it is established in each case which auxiliary clock pulse (HT1 - HT8) is selected as clock pulse (Ta, Ta1-Ta6) at said time (t1), and
   it is determined in each case which auxiliary clock pulse (HT1-HT8) first detects with its active edge a change in the data signal (D) from the defined state,
   characterised in that
   in each case said auxiliary clock pulse ($HT_x$), m auxiliary clock pulses whose phase is immediately before said auxiliary clock pulse ($HT_x$), and m-1 auxiliary clock pulses whose phase is immediately after said auxiliary clock pulse

$(HT_x)$ are excluded

$$\left( m \leq \frac{n-1}{2} \right)$$

from the selection of a net clock pulse (Tb, Tb1 - Tb6),

in that in each case no new clock pulse (Tb, Tb1 - Tb6) is selected if the previous one (Ta, Ta1 - Ta6) is one of the non-excluded auxiliary clock pulses (HT1 - HT8),

in that in each case an auxiliary clock pulse (HT1 - HT8) whose phase is the next closest to the phase of the previous clock pulse (Ta, Ta1 - Ta6) and is not excluded is selected as new clock pulse (Tb, Tb1 - Tb6) if the previous one is one of the excluded auxiliary clock pulses (HT1 - HT8), and

in that when commencing with the method, any non-excluded auxiliary clock pulse (HT1 - HT8) is selected as clock pulse (Ta).

2. Method according to Claim 1, characterised in that the frequency $f_{HT}$ is selected between the limit values

$$f_{DT} \pm \frac{f_{DT}}{n \cdot o} ,$$

where $f_{DT}$ is the frequency of the data signal clock pulse and o is the maximum number of auxiliary clock periods per active data edge.

3. Arrangement for clock recovery from a data signal by continual adjustment of a locally generated clock pulse (T) to the data signal (D),

in which a phase detector (7) is provided which determines which auxiliary clock pulse (HT1 - HT8) first detects with its active edge a change in the data signal (D) from the defined state in an adjustment interval,

a control logic device (8) is provided which selects one of the auxiliary clock pulses (HT1 - HT8) as clock pulse (T), and

a spike-free changeover switch (9) is provided which is set by the control logic device (8),

characterised in that means are provided in the control logic device (8) which establish which auxiliary clock pulse (HT1 - HT8) is selected as clock pulse (Ta, Ta1 - Ta6),

in that means are provided which exclude the auxiliary clock pulses whose phase is immediately before and if appropriate also after the auxiliary clock pulse ($HT_x$ = HT5) which first detects a change in the data signal (D) from the selection of the new clock pulse (Tb, Tb1 - Tb6), and

in that means are provided which select the auxiliary clock pulse ($HT_x$ - HT3) whose phase is the next closest and is not excluded if the previous auxiliary clock ($HT_x$) is excluded from the selection of a new clock pulse (Tb = HT3).

4. Arrangement according to Claim 3 for $m = 1$ and $n = 4$, characterised in that

the phase detector (7) contains

an OR gate (11), the two inputs of which serve to receive a pseudoternary data signal (D) split into two pulses (Da, Db) according to polarity,

a fifth D-type flip-flop (12), the clock input of which is connected to the output of the OR gate (11),

a first to fourth NAND gate (13 - 16), the first inputs of which are connected in each case to the Q output of the fifth D-type flip-flop (12), a first to fourth D-type flip-flop (17 - 20), the D inputs of which are connected in each case to the output of the NAND gate (13 - 16) having the same ordinal number, and the Q outputs of which are connected in each case to the second input of the NAND gate (13 - 16) having the cyclically preceding ordinal number, and the clock inputs of which serve in each case to receive an auxiliary clock pulse (HT1 - HT4) having the same ordinal number,

a first to fourth AND gate (24 - 27), the first inputs of which are connected in each case to the $\overline{Q}$ output of the D-type flip-flop (17 - 20) having the same ordinal number, and the second inputs of which are connected in each case to the Q output of the D-type flip-flop (17 - 20) having the ordinal number cyclically following in third place,

a first NOR gate (23), the first input of which is connected to the second input of the first AND gate (24), and the second input of which is connected to the Q output of the second D-type flip-flop (18),

a second NOR gate (22), the first input of which is connected to the second input of the second AND gate (25), and the second input of which is connected to the Q output of the third D-type flip-flop (19), and

a third NOR gate (21), the first input of which is connected to the output of the first NOR gate (23), the second input of which is connected to the output of the second NOR gate (22), and the output of which is connected to the reset input of the fifth D-type flip-flop (12).

5. Arrangement according to Claims 3 and 4 for $m = 1$ and $n = 4$, characterised in that the control logic device (8) contains

a fourth NOR gate (28), the first input of which is connected to the output of the first AND gate (24),

a fifth NOR gate (29), the first input of which is connected to the output of the second AND gate (25),

a sixth NOR gate (30), the first input of which is connected to the output of the third AND gate (26),

a seventh NOR gate (31), the first input of which is connected to the output of the fourth AND gate (27),

a sixth D-type flip-flop (32), the D input of which is connected to the output of the fourth NOR gate (28) and the Q output of which is connected to the second input of the sixth NOR gate (30), and the clock input of which serves to receive the third auxiliary clock pulse (HT3),

a seventh D-type flip-flop (33), the D input of which is connected to the output of the fifth NOR gate (29) and the Q output of which is connected to the second input of the seventh NOR gate (31), and the clock input of which serves to receive the fourth auxiliary clock pulse (HT4),

an eighth D-type flip-flop (34), the D input of which is connected to the output of the sixth NOR gate (30) and the Q output of which is connected to the second input of the fourth NOR gate (28), and the clock input of which serves to receive the first auxiliary clock pulse (HT1), and

a ninth D-type flip-flop (35), the D input of which is connected to the output of the seventh NOR gate (31) and the Q output of which is connected to the second input of the fifth NOR gate (29), and the clock input of which serves to receive the second auxiliary clock pulse (HT2).

6. Arrangement according to Claims 3, 4 and 5 for m = 1 and n = 4, characterised in that the changeover switch (9) contains

a fifth NAND gate (36), the first input of which is connected to the $\overline{Q}$ output of the ninth D-type flip-flop (35) (sic) and the second input of which is connected to the $\overline{Q}$ output of the sixth D-type flip-flop (32), and the third input of which serves to receive the fourth auxiliary clock pulse (HT4),

a sixth NAND gate (37), the first input of which is connected to the $\overline{Q}$ output of the sixth D-type flip-flop (32) and the second input of which is connected to the $\overline{Q}$ output of the seventh D-type flip-flop (33), and the third input of which serves to receive the first auxiliary clock pulse (HT1),

a seventh NAND gate (38), the first input of which is connected to the $\overline{Q}$ output of the seventh D-type flip-flop (33) and the second input of which is connected to the $\overline{Q}$ output of the eighth D-type flip-flop (34), and the third input of which serves to receive the second auxiliary clock pulse (HT2),

an eighth NAND gate (39), the first input of which is connected to the $\overline{Q}$ output of the eighth D-type flip-flop (34), the second input of which is connected to the $\overline{Q}$ output of the ninth D-type flip-flop (35), and the third input of which serves to receive the third auxiliary clock pulse (HT3), and

a fifth AND gate (40), the inputs of which are connected in each case to an output of the fifth to eighth NAND gate (36 - 39), and the output of which serves as overall output (10).

**Revendications**

1. Procédé pour récupérer la cadence à partir d'un signal de données, par adaptation continue au signal de données (D) d'une cadence (T) produite localement, et selon lequel

n cadences auxiliaires (HT1-HT8) sont produites, qui possèdent la même fréquence $f_{HT}$ située au voisinage de la cadence binaire du signal de données (D) et qui forment une suite (n 2) présentant des déphasages égaux à 360°/n et dont l'une est utilisée en tant que cadence (T),

chaque intervalle d'adaptation commence à un instant (t1), auquel le signal de données (D) possède un état défini, et

selon lequel on détermine respectivement quelle cadence (HT1-HT8) est sélectionnée à cet instant (t1) en tant que cadence (Ta,Ta1-Ta6), et

on détermine respectivement quelle cadence auxiliaire (HT1-HT8) identifie, par son flanc actif, tout d'abord une modification du signal de données (D) à partir de l'état défini,

caractérisé par le fait

que respectivement cette cadence auxiliaire (HTx), m cadences auxiliaires situées directement en amont de cette cadence auxilaire (HTx) du point de vue de la phase et m-1 cadences auxiliaires situées directement en aval de cette cadence auxiliaire (HTx) du point de vue de la phase, sont exclues de la sélection d'une nouvelle cadence (Tb,Tb1-Tb6)

$$\left( m \leq \frac{n-1}{2} \right),$$

que respectivement aucune nouvelle cadence (Tb,Tb1-Tb6) n'est sélectionnée lorsque la cadence précédente (Ta,Ta1-Ta6) est l'une des cadences auxiliaires (HT1-HT8) non exclues,

que respectivement une cadence auxiliaire (HT1-HT8), qui est directement voisine, du point de vue de la phase, de la cadence précédente (Ta,Ta1-Ta6) et n'est pas exclue, est sélectionnée en tant que nouvelle cadence (Tb,Tb1-Tb6), lorsque la cadence précédente est l'une des cadences auxiliaires (HT1-HT8) exclues, et

que lors du démarrage du procédé, une cadence auxiliaire (HT1-HT8) non exclue est sélectionnée en tant que cadence (Ta).

2.   Procédé suviant la revendication 1, caractérisé par le fait que la fréquence $f_{HT}$ est choisie entre les valeurs limites

$$f_{DT} \pm \frac{f_{DT}}{n.o},$$

$f_{DT}$ représentant la fréquence de la cadence du signal de données et o le nombre minimum de périodes de cadences auxiliaires pour chaque flanc de données actifs.

3.   Dispositif pour récupérer une cadence à partir d'un signal de données au moyen d'une adaptation continue d'une cadence T, produite localement, au signal de données (D), et dans lequel

il est prévu un détecteur de phase (7) qui détermine quelle cadence auxiliaire (HT1-HT8) identifie par son flanc actif, dans un intervalle d'adaptation, tout d'abord une modification du signal de données (D) à partir de l'état défini,

il est prévu une logique de commande (8), qui sélectionne l'une des cadences auxiliaires (HT1-HT8) en tant que cadence (T),

il est prévu un commutateur sans pointe (9), qui est réglé par la logique de commande, caractérisé par le fait

que dans la logique de commande (8) il est prévu des moyens qui déterminent quelle cadence auxiliaire (HT1-HT8) est sélectionnée en tant que cadence (Ta,Ta1-Ta6),

qu'il est prévu des moyens qui excluent les cadences auxiliaires qui sont situées, du point de vue de la phase, directement en amont et éventuellement en aval de la cadence auxiliaire (HTx = HT5), qui identifie tout d'abord une modification du signal de données (D), de la sélection de la nouvelle cadence (Tb, Tb1-Tb6), et

qu'il est prévu des moyens qui sélectionnent la cadence auxiliaire (HTx = HT3) non exclue, qui est la plus proche du point de vue de la phase, lorsque la cadence auxiliaire précédente (HT$_x$) est exclue de la sélection d'une nouvelle cadence (Tb = HT3).

4.   Dispositif suivant la revendication 3 pour m = 1 et n = 4, caractérisé par le fait

que le détecteur de phase (7) possède

une porte OU (11), dont deux entrées servent à recevoir un signal de données pseudo-ternaire (D) subdivisé, en fonction de la polarité, en deux impulsions (Da,Db),

une cinquième bascule bistable de type D (12), dont l'entrée de cadence est raccordée à la sortie de la porte OU (11),

des première, deuxième, troisième, quatrième portes NON-ET (13-16), dont la première entrée est raccordée respectivement à la sortie (Q) de la cinquième bascule bistable de type D (12),

des première, seconde, troisième, quatrième bascules bistables de type D (17-20), dont les entrées (D) sont raccordées respectivement à la sortie de la porte NON-ET (13-16) possédant le même numéro et dont les sorties (Q) sont raccordées respectivement à la seconde entrée de la porte NON-ET (13-16) possédant le numéro précédent dans l'ordre cyclique et dont les entrées de cadence sont utilisées respectivement pour recevoir une cadence auxiliaire (HT1-HT4) possédant le même numéro,

des première, seconde, troisième et quatrième portes ET (24-27), dont la première entrée est raccordée respectivement à la sortie ($\overline{Q}$) de la bascule bistable de type D (17-20) de même numéro et dont la seconde entrée est raccordée respectivement à la sortie Q de la bascule bistable de type D (17-20), dont le numéro succède cycliquement en troisième position,

une première porte NON-ET (23) dont la première entrée est raccordée à la seconde entrée de la première porte ET (24) et dont la seconde entrée est raccordée à la sortie Q de la seconde bascule bistable de type D (18),

une seconde porte NON-ET (22), dont la première entrée est raccordée à la seconde entrée de la seconde porte ET (25) et dont la seconde entrée est raccordée à la sortie Q de la troisième bascule bistable de type D (19), et

une troisième porte NON-ET (21), dont la première entrée est raccordée à la sortie de la première porte NON-OU (23), dont la seconde entrée est raccordée à la sortie de la seconde porte NON-ET (22) et dont la sortie est raccordée à l'entrée de remise à l'état initial de la cinquième bascule bistable de type D (12).

5. Dispositif suivant les revendications 3 et 4 pour m = 1 et n = 4, caractérisé par le fait que la logique de commande (8) comporte une quatrième porte NON-ET (28), dont la première entrée est raccordée à la sortie de la première porte ET (24), une cinquième porte NON-ET (29), dont la première entrée est raccordée à la sortie de la seconde porte ET (25), une sixième porte NON-ET (30), dont la première entrée est raccordée à la sortie de la troisième porte ET (26), une septième porte NON-ET (31), dont la première entrée est raccordée à la sortie de la quatrième porte ET (27), une sixième bascule bistable de type D (32), dont l'entrée D est raccordée à la sortie de la quatrième porte NON-ET (28) et dont la sortie Q est raccordée à la seconde entrée de la sixième porte NON-ET (30) et dont l'entrée de cadence sert à recevoir la troisième cadence auxiliaire (HT3), une septième bascule bistable de type D (33), dont l'entrée (D) est raccordée à la sortie de la cinquième porte NON-ET (29) et dont la sortie Q est raccordée à la seconde entrée de la septième porte NON-ET (31) et dont l'entrée de cadence sert à recevoir la quatrième cadence auxiliaire (HT4), une huitième bascule bistable de type D (34), dont l'entrée (D) est raccordée à la sortie de la sixième porte NON-ET (30) et dont la sortie Q est raccordée à la seconde entrée de la quatrième porte NON-OU (28) et dont l'entrée de cadence sert à recevoir la première cadence auxiliaire (HT1) et comporte une neuvième bascule bistable de type D (35), dont l'entrée D est raccordée à la sortie de la septième porte NON-ET (31) et dont la sortie Q est raccordée à la seconde entrée de la cinquième porte NON-OU (29) et dont l'entrée de cadence sert à recevoir la seconde cadence auxiliaire (HT2).

6. Dispositif suivant les revendications 3, 4 et 5 pour m = 1 et n = 4, caractérisé par le fait que le commutateur (9) comprend une cinquième porte NON-ET (36), dont la première entrée est raccordée à la sortie $\overline{Q}$ de la neuvième bascule bistable de type D (35) et dont la seconde entrée est raccordée à la sortie $\overline{Q}$ de la sixième bascule bistable de type D (32) et dont la troisième entrée sert à recevoir la quatrième cadence auxiliaire HT4, une sixième porte NON-ET (37), dont la première entrée est raccordée à la sortie $\overline{Q}$ de la sixième bascule bistable de type D (32) et dont la seconde entrée est raccordée à la sortie $\overline{Q}$ de la septième bascule bistable de type D (33) et dont la troisième entrée sert à recevoir la première cadence auxiliaire (HT1), une septième porte NON-ET (38), dont la première entrée est raccordée à la sortie $\overline{Q}$ de la septième bascule bistable de type D (33) et dont la seconde entrée est raccordée à la sortie $\overline{Q}$ de la huitième bascule bistable de type D (34) et dont la troisième entrée sert à recevoir la seconde cadence auxiliaire (HT2), une huitième porte NON-ET (39), dont la première entrée est raccordée à la sortie $\overline{Q}$ de la huitième bascule bistable de type D (34), dont la seconde entrée est raccordée à la sortie $\overline{Q}$ de la neuvième bascule bistable de type D (35) et dont la troisième entrée sert à recevoir la troisième cadence auxiliaire (HT3), et une cinquième porte ET (40), dont les entrées sont raccordées respectivement à une sortie des cinquième, sixième, septième et huitième portes NON-ET (36-39), et dont la sortie est utilisée en tant que sortie générale (10).

# FIG 1

Ta 2

HT1 = HT$_{x-1}$

Tb 2 ◯ HT4

HT2 = HT$_x$   Ta 1

HT3

Tb1

n = 4
m = 1

# FIG 2

D

Da

$\overline{Db}$

D1

FIG 3

EP 0 339 515 B1

# FIG 4

n=8
m=2

# FIG 5

FIG 6

FIG 7